# EUROPÄISCHE PATENTSCHRIFT

(11) **EP 3 170 643 B1**
(45) Veröffentlichungstag und Bekanntmachung des Hinweises auf die Patenterteilung: **10.01.2018**
(21) Anmeldenummer: 15195629.9
(22) Anmeldetag: 20.11.2015
(51) Int. Cl.: B29C 51/04, B29C 51/08, B29C 51/20, B29L 31/00

(54) **FORMVORRICHTUNG ZUM TIEFZIEHEN VON NÄPFEN**
MOULDING DEVICE FOR THE DEEP-DRAWING OF CUPS
DISPOSITIF DE FORMAGE POUR EMBOUTIR DES GODETS

(43) Veröffentlichungstag der Anmeldung: 24.05.2017
(73) Patentinhaber: UHLMANN PAC-SYSTEME GmbH & Co. KG, 88471 Laupheim (DE)
(72) Erfinder: Gertitschke, Detlev, 88471 Laupheim (DE)
(74) Vertreter: Wächter, Jochen

(56) Entgegenhaltungen:
- EP-A1- 1 116 579
- DE-U1-202011 001 623

## Beschreibung

Die vorliegende Erfindung betrifft eine Formvorrichtung zum Tiefziehen von Näpfen in einer erwärmten Folienbahn.
Formvorrichtungen dieser Art kommen beispielsweise in der pharmazeutischen Industrie bei der Herstellung von Blisterfolien zur Anwendung. Hierbei wird in einer erwärmten Folienbahn eine Vielzahl von Näpfen eingeformt, in welche die pharmazeutischen Produkte, wie etwa Dragees oder Tabletten, eingebracht werden sollen. Aber auch in vielen anderen Industriebereichen werden Formvorrichtungen zum Tiefziehen eingesetzt.
Es gibt eine Reihe von verschiedenen Verfahren zum Tiefziehen von Folien, beispielsweise mittels Druckluft und/oder Vakuumansaugung oder durch reine Positivformung. Beim Tiefziehen einer erwärmten Folienbahn mittels Druckluft werden Vorstreckstempel eingesetzt, um je nach Folienart, Foliendicke und Durchmesser-/Tiefenverhältnis der zu formenden Näpfe gleichmäßige Wanddicken zu gewährleisten und den Formprozess zu unterstützen. Bei einer aus DE 102 20 701 A1 bekannten Formvorrichtung sind eine Vielzahl von Vorstreckstempeln vorgesehen, die jeweils über separate Zuleitungen mit Formluft versorgt werden. Beim Formen der Näpfe erfolgt zunächst, durch die Verstellung der Vorstreckstempel eines ersten Werkzeugs relativ zu Formausnehmungen eines zweiten Werkzeugs, eine Vorstreckung der Folie. Anschließend wird über die Zuleitungen die Formluft zugeführt und über die Vorstreckstempel in die vorgestreckten Formnester eingeblasen, um die endgültige Ausformung der Näpfe zu erhalten. Dies führt zu hohen Strömungsverlusten.
EP 1 116 579 A1 schlägt eine Formvorrichtung mit einem oberen und einem unteren Werkzeug vor, wobei das obere Werkzeug einen Vorstreckstempel und das untere Werkzeug eine Formausnehmung aufweist. In dem Vorstreckstempel ist ein Luftkanal ausgebildet. DE 20 2011 001 623 U1 offenbart eine Formvorrichtung mit Andrückvorrichtung, um eine Kunststofffolie an dem unteren Werkzeug festzulegen. Die Andrückvorrichtung weist Durchgangsöffnungen auf, die von Vorstreckstempeln des oberen Werkzeugs beim Formvorgang durchdrungen sind. DE 20 2011 001623 offenbart eine Formvorrichtung zum Tiefziehen von Näpfen in einer erwärmten Folienbahn mit einem ersten Formwerkzeug, das ein Stempelelement, mit mindestens einem vorstehenden Stempelvorsprung aufweist, einem zweiten Formwerkzeug mit mindestens einer Formausnehmung, wobei das erste und das zweite Formwerkzeug derart angeordnet und ausgebildet sind, dass in einer Formposition der Formvorrichtung der mindestens eine Stempelvorsprung in der mindestens einen Formausnehmung in dem zweiten Formwerkzeug aufgenommen ist, wobei das erste Formwerkzeug weiterhin eine Andrückplatte aufweist, in der mindestens eine Durchgangsöffnung gebildet ist, und der mindestens eine Stempelvorsprung in der Formposition der Formvorrichtung die mindestens eine Durchgangsöffnung durchdringt, wobei in dem Stempelelement weiterhin ein Hohlraum ausgebildet ist, der an einer Seite von einer Wandfläche begrenzt ist, und der Durchgangskanal über eine Öffnung in der Wandfläche mit dem Hohlraum verbunden ist. Es ist die Aufgabe der vorliegenden Erfindung, eine Formvorrichtung zum Tiefziehen von Näpfen in einer erwärmten Folienbahn anzugeben, bei der der Durchsatz bei geringerem Luftverbrauch optimiert ist.

Diese Aufgabe wird durch die Merkmale des Anspruchs 1 gelöst.

Erfindungsgemäß wird eine Formvorrichtung zum Tiefziehen von Näpfen in einer erwärmten Folienbahn vorgeschlagen mit einem ersten Formwerkzeug, das ein Stempelelement mit mindestens einem vorstehenden Stempelvorsprung und eine Andrückplatte, in der mindestens eine Durchgangsöffnung gebildet ist, aufweist. Die Formvorrichtung weist weiterhin ein zweites Formwerkzeug mit mindestens einer Formausnehmung auf. Das erste und das zweite Formwerkzeug sind derart angeordnet und ausgebildet, dass in einer Formposition der Formvorrichtung der mindestens eine Stempelvorsprung die mindestens eine Durchgangsöffnung durchdringt und in der mindestens einen Formausnehmung in dem zweiten Formwerkzeug aufgenommen ist. In dem Stempelelement ist ein Hohlraum ausgebildet, der an einer Seite von einer Wandfläche begrenzt ist, und in dem Stempelvorsprung ist ein Durchgangskanal gebildet, der über eine Öffnung in der Wandfläche mit dem Hohlraum verbunden ist. In dem Hohlraum ist wiederum eine Ventileinrichtung zum Öffnen und Schließen der Öffnung in der Wandfläche vorgesehen.

Der in dem Stempelelement ausgebildete Hohlraum fungiert als ein Druckluftspeicher zum Bevorraten von Druckluft. Da sich dieser Druckluftspeicher in unmittelbarer Nähe zum Vorstreckstempel befindet, ist der Transportweg der Druckluft zum Vorstreckstempel minimal. Da somit das Totvolumen minimal ist, treten keine großen Druckluftabfälle auf, d.h. das Wiederbefüllen des Hohlraumes mit Druckluft kann sehr rasch erfolgen, sodass eine höhere Taktung und damit ein verbesserter Durchsatz erreicht werden.

Bei einer bevorzugten Ausgestaltung ist die Wandfläche mindestens teilweise als ebene Fläche ausgebildet, sodass sich die Druckluft gleichmäßig im Nahbereich der Öffnung verteilen kann. Eine gleichmäßige Druckluftverteilung nahe der Öffnung ist maßgeblich für ein nahezu verlustfreies Strömungsverhalten bei geöffneter Ventileinrichtung.

Vorzugsweise ist in dem Stempelelement weiterhin ein Anschluss zum Anschließen einer externen Druckluftquelle an den Hohlraum ausgebildet. Damit sind zum Zuleiten der Druckluft herkömmliche, handelsübliche Druckluftleitungen, wie etwa flexible Leitungen, verwendbar. Zudem sind die Wartung und insbesondere der wartungsbedingte Austausch von Druckluftleitungen vereinfacht.

Eine besonders vorteilhafte Ausgestaltung der Ventileinrichtung umfasst einen Ventil-Hauptkörper, der in dem Hohlraum verschiebbar, vorzugsweise vertikal verschiebbar, angeordnet ist, und ein in Richtung auf die Öffnung vorgespanntes Schließelement.

Darüber hinaus ist es bevorzugt, wenn der Ventil-Hauptkörper eine bevorzugt horizontale Ventilplatte ist. Damit bilden die Wandfläche und der Ventil-Hauptkörper zwischen sich einen Zwischenraum. Das Luftströmungsverhalten ist stabilisiert, da beim Öffnen der Ventileinrichtung die Druckluft in einer definierten seitlichen Richtung zur Öffnung hin strömt und dementsprechend keine Verwirbelungen auftreten.

Ein besonders effektives Schließverhalten des Schließelements wird erreicht, wenn in der Ventilplatte eine zentrale Durchgangsöffnung ausgebildet ist und das Schließelement in der Durchgangsöffnung verschiebebeweglich gelagert ist.

Mit weiterem Vorteil ist das Schließelement an einer weiteren Wandfläche, die der Wandfläche mit der Öffnung gegenüberliegt, in Richtung auf das zweite Formwerkzeug federnd abgestützt, wodurch eine gleichbleibende Schließkraft, die auf das Schließelement aufgebracht wird, erreicht wird.

Das Schließelement selbst ist vorzugsweise kugelförmig ausgebildet.

Bei einer weiteren speziellen Ausgestaltung umfasst das Stempelelement weiterhin eine Platte, die den Hohlraum an der der Wandfläche mit der Öffnung gegenüberliegenden Seite begrenzt und in welcher mindestens eine Durchführungsöffnung gebildet ist, wobei mindestens eine Schubstange vorgesehen ist, die sich durch die mindestens eine Durchführungsöffnung erstreckt und mit dem Ventil-Hauptkörper verbunden ist. Durch die direkte mechanische Verbindung der mindestens einen Schubstange mit dem Ventil-Hauptkörper ist die Ansprechzeit der Ventileinrichtung minimal, was eine präzise Steuerung der Öffnungs- und Schließvorgänge begünstigt.

Schließlich ist ein Linearaktor vorgesehen, der die Ventileinrichtung hin zur Öffnung und weg von ihr bewegt. Der Linearaktor kann vorzugsweise ein Pneumatikzylinder oder Magnetaktor sein.

Weitere Eigenschaften und Vorteile der vorliegenden Erfindung ergeben sich aus der nachfolgenden Beschreibung unter Bezugnahme auf die Zeichnungen.
- Fig. 1: ist eine Ansicht im Schnitt einer Ausführungsform der erfindungsgemäßen Formvorrichtung im geöffneten Zustand;
- Fig. 2: ist eine Ansicht im Schnitt der Formvorrichtung aus Fig. 1 im geschlossenen Zustand;
- Fig. 3: ist eine Ansicht im Schnitt der Formvorrichtung aus Fig. 1 im geschlossenen Zustand nach abgeschlossenem Vorstreckvorgang;
- Fig. 4: ist eine Ansicht im Schnitt der Formvorrichtung aus Fig. 1 im geschlossenen Zustand nach abgeschlossenem Druckluftformvorgang; und
- Fig. 5: ist eine Ansicht einer weiteren Ausführungsform der erfindungsgemäßen Formvorrichtung im geöffneten Zustand.

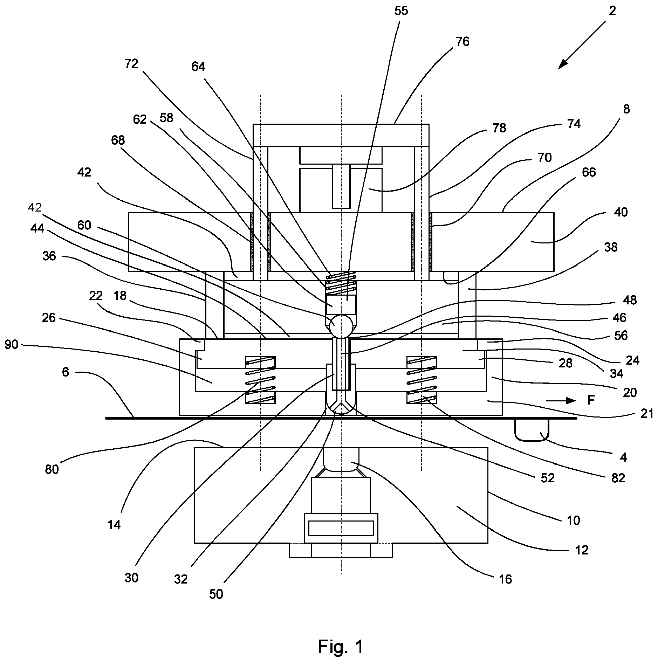

Fig. 1 zeigt in Schnittdarstellung den Aufbau einer Ausführungsform der erfindungsgemäßen Formvorrichtung 2. Die Formvorrichtung 2 ist im geöffneten Zustand gezeigt. Wie in Fig. 1 zu sehen, umfasst die Formvorrichtung 2 zum Tiefziehen von Näpfen 4 in einer erwärmten Folienbahn 6 ein erstes Formwerkzeug 8 und ein zweites Formwerkzeug 10. Zwischen dem ersten Formwerkzeug 8 und dem zweiten Formwerkzeug 10 ist die Folienbahn 6 in Förderrichtung F geführt. Im vorliegenden Fall ist das erste Formwerkzeug 8 das obere Formwerkzeug und das zweite Formwerkzeug 10 das untere Formwerkzeug, es ist aber auch eine auf den Kopf gestellte Konfiguration denkbar ebenso wie eine schräge Anordnung dieser Komponenten relativ zur Horizontalen.

Wie in Fig. 1 weiter zu sehen, ist das zweite Formwerkzeug 10 von der Folienbahn 6 beabstandet angeordnet. Das zweite Formwerkzeug 10 ist mittels eines nicht gezeigten Antriebs in einer Schließrichtung hin zum ersten Formwerkzeug 8 verstellbar. Das zweite Formwerkzeug 10 besteht aus einer Formplatte 12, in deren Oberfläche 14 mindestens eine Formausnehmung 16 ausgebildet ist, welche die äußere Form eines tiefzuziehenden Napfes hat.

Das erste Formwerkzeug 8 umfasst ein Stempelelement 18 und einen Niederhalter 20. Allgemein sind das Stempelelement 18 und der Niederhalter 20 so ausgebildet, dass ein Teil des Stempelelements 18 in Richtung zum zweiten Formwerkzeug 10 und entgegengesetzt beweglich in dem Niederhalter 20 aufgenommen ist. In der Schnittansicht ist der Niederhalter 20 in Form eines U-Profils mit einer Andrückplatte 21 und nach innen weisenden freien Endabschnitten 22, 24 ausgebildet. Das in Fig. 1 untere Ende des Stempelelements 18 weist seitlich auskragende Vorsprünge 26, 28 auf. Ein Ende des Stempelelements 18 ist in dem offenen Aufnahmeraum des U-förmigen Niederhalters 20 derart aufgenommen, dass die seitlich auskragenden Vorsprünge 26, 28 an den Flächen der nach innen weisenden freien Endabschnitte 22, 24 zur Anlage kommen können. Dies geschieht bei einer Bewegung des Stempelelements 18 in Richtung weg vom zweiten Formwerkzeug 10 (Fig. 1). Während des Formvorgangs bleibt der Niederhalter 20 vorzugsweise immer an seiner Position, bewegt wird nur das Stempelelement 18 des ersten Formwerkzeugs 8 sowie das zweite Formwerkzeug 10.

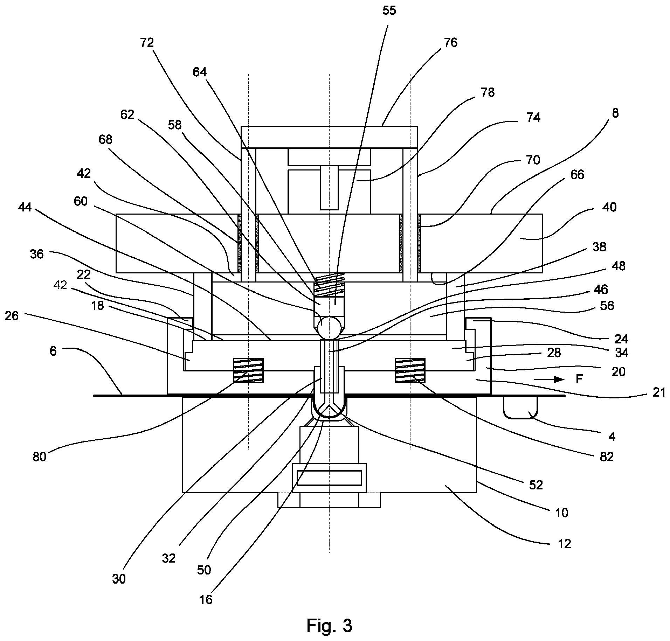

In zentraler Anordnung weist das Stempelelement 18 einen Stempelvorsprung 30 auf, der in Fig.1 vertikal nach unten vorsteht. Vorzugsweise ist der Stempelvorsprung 30 an einer Platte 34 des Stempelelements 18 angeschraubt. Korrespondierend zum Stempelvorsprung 30 weist die Andrückplatte 21 des Niederhalters 20 eine Durchgangsöffnung 32 auf. Der Stempelvorsprung 30 ragt in der in Fig. 1 gezeigten Position in die Durchgangsöffnung 32 hinein. Bei einer Bewegung des Stempelelements 18 in Richtung des zweiten Formwerkzeugs 10 kommt das Stempelelement 18 an der Andrückplatte 21 zur Anlage und ist in einer Formposition angeordnet, in der der Stempelvorsprung 30 die Durchgangsöffnung 32 durchdringt, wie in Fig. 3 gezeigt.

Wieder bezugnehmend auf Fig. 1 besteht das Stempelelement 18 aus der Platte 34, Seitenwänden 36, 38 und einer der Platte 34 gegenüberliegenden Platte 40, die derart miteinander verbunden sind, dass sie einen Hohlraum 42 im Inneren des Stempelelements 18 definieren. Die Seitenwände 36, 38 bilden eine durchgehende, umlaufende Wandung. Der Hohlraum 42 wird von einer Wandfläche 44, In Fig. 1 der oberen Oberfläche der Platte 34, begrenzt. In dem in zentraler Anordnung vorgesehenen Stempelvorsprung 30 ist ein Durchgangskanal 46 gebildet, der über eine Öffnung 48 in der Wandfläche 44 mit dem Hohlraum 42 verbunden ist und über Austrittsöffnungen 50, 52 in der Oberfläche des Stempelvorsprungs 30 mit der Atmosphäre in Verbindung steht.

In dem Hohlraum 42 des Stempelelements 18 ist eine Ventileinrichtung 55 zum Öffnen und Schließen der Öffnung 48 in der Wandfläche 44 vorgesehen. Die Ventileinrichtung 55 umfasst einen Ventil-Hauptkörper 56, in dem eine zentrale Durchgangsöffnung 58 ausgebildet ist, die in der Anordnung gemäß Fig. 1 vertikal verläuft. Der Ventil-Hauptkörper 56 wird von der Luft im Hohlraum 42 umströmt und ist vorzugsweise als Ventilplatte ausgebildet.

In der Durchgangsöffnung 58 ist ein kugelförmiges Schließelement 60 zusammen mit einem Schiebeelement 62 verschiebebeweglich gelagert und über eine Spiralfeder 64 an einer Wandfläche 66, die gegenüber der Wandfläche 44 angeordnet ist, federnd abgestützt. Das Schiebeelement 62 ist in Richtung zur Öffnung 48 vorgespannt und drückt gegen das kugelförmige Schließelement 60, das somit ebenfalls in Richtung auf die Öffnung 48 in der Wandfläche 44 vorgespannt ist. Es ist zu beachten, dass die Durchgangsöffnung 58 an der der Öffnung 48 zugewandten Seite des Ventil-Hauptkörpers 56 einen kleineren Durchmesser als das Schließelement 60 hat, wodurch dieses in Richtung zur Öffnung 48 unverlierbar in der Durchgangsöffnung 58 gehalten ist. Das Schließelement 60 und die in Fig. 1 untere Öffnung der Durchgangsöffnung 58 sind zudem so dimensioniert, dass in der in Fig. 1 gezeigten vorgespannten Position ein Abschnitt des kugelförmigen Schließelements 60 von dem Ventil-Hauptkörper 56 in Richtung der Öffnung 48 vorsteht.

In der Platte 40, die den Hohlraum 42 in Fig. 1 nach oben begrenzt, sind zwei Durchführungsöffnungen 68, 70 ausgebildet. Zwei Schubstangen 72, 74 erstrecken sich von außerhalb des Hohlraums 42 durch die Durchführungsöffnungen 68, 70 in den Hohlraum 42 und sind mit dem Ventil-Hauptkörper 56 verbunden. Beide außerhalb des Hohlraums 42 befindlichen Enden der Schubstangen 72, 74 sind über ein Querstück 76 miteinander verbunden. Auf der Kopfplatte 40 ist ein Linearaktor 78 angeordnet, der das Querstück 76 und damit die beiden Schubstangen 72, 74 hin und her bewegen kann. Es sind weiterhin Dichtungsmittel vorgesehen, welche die Schubstangen 72, 74 gegenüber den Durchführungsöffnungen 68, 70 luftdicht abdichten.

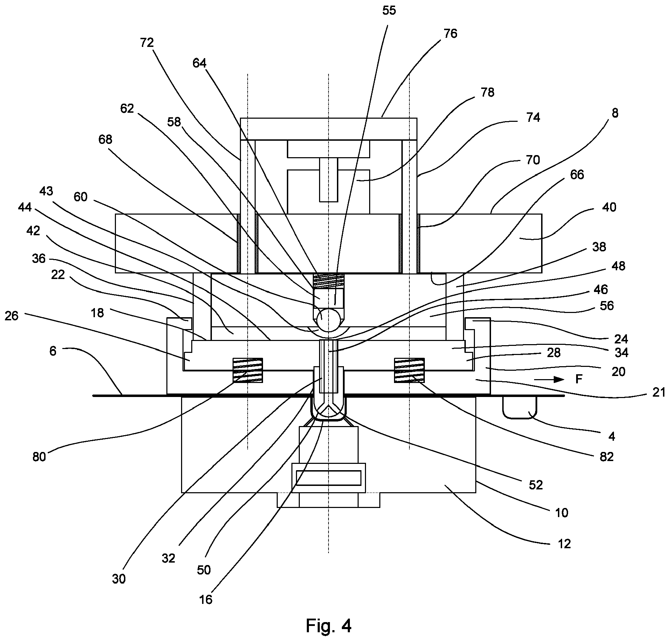

Über den nur in Fig. 4 schematisch gezeigten Anschluss 43 ist der Hohlraum 42 an eine externe Druckluftquelle angeschlossen, um den Hohlraum 42 mit Druckluft zu beaufschlagen. Der Anschluss 43 kann dabei an den Seitenwänden 36, 38 oder an der Kopfplatte 40 vorgesehen sein. Idealerweise ist der Hohlraum 42 ständig mit Druckluft beaufschlagt.

Ein Vorgang zum Tiefziehen eines Napfes in einer erwärmten Folienbahn wird nachfolgend anhand von Fig. 1 bis 4 beschrieben. Entscheidend für die Funktion der Formvorrichtung 2 ist die relative Bewegbarkeit der verschiedenen Komponenten der Formvorrichtung 2 zueinander. Hierbei ist das zweite Formwerkzeug 10 relativ zu dem ersten Formwerkzeug 8 bewegbar, das Stempelelement 18 ist relativ zu dem Niederhalter 20 bewegbar, und der Ventil-Hauptkörper 56 ist relativ zu der den Hohlraum 42 begrenzenden Wandfläche 44 des Stempelelements bewegbar.

In Fig. 1 ist die Formvorrichtung 2 im geöffneten Zustand gezeigt, d.h. das zweite Formwerkzeug 10 ist von dem ersten Formwerkzeug 8 beabstandet. Der Niederhalter 20 des ersten Formwerkzeugs 8 liegt knapp über der Folienbahn 6. Das Stempelelement 18 ist dabei relativ zu dem Niederhalter 20 so angeordnet, dass sich der Stempelvorsprung 30 in der gesamten Durchgangsöffnung 32 erstreckt und ebenfalls knapp über der Folienbahn 6 liegt. Weiterhin ist das Schließelement 60 zum Schließen der Öffnung 48 in die Schließposition bewegt. Hierzu wurde der Ventil-Hauptkörper 56 durch den Linearaktor 78 in Richtung der Öffnung 48 bewegt. Der Hohlraum 42 ist in der in Fig. 1 gezeigten Anordnung mit Druckluft beaufschlagt.

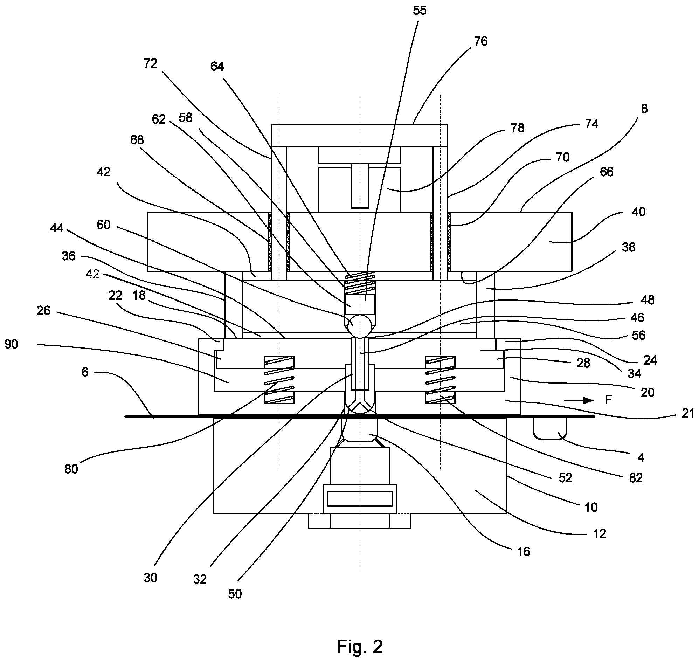

In Fig. 2 wurde die Formvorrichtung 2 ausgehend von dem Zustand in Fig. 1 in einem geschlossenen Zustand angeordnet, indem das zweite Formwerkzeug 10 in Richtung auf das erste Formwerkzeug 8 bewegt wurde. Dabei wurde die durchlaufende Folienbahn 6 zwischen dem Niederhalter 20 des ersten Formwerkzeugs 8 und dem zweiten Formwerkzeug 10 fixiert bzw. eingespannt.

In Fig. 3 sind, ausgehend von dem Zustand in Fig. 2, das erste Formwerkzeug 8 und das zweite Formwerkzeug 10 zur Durchführung eines Vorstreckvorgangs in einer Formposition angeordnet worden. Hierzu wurde ausgehend von der Anordnung in Fig. 2 das Stempelelement 18 relativ zu dem Niederhalter 20 gegen die Federkraft der Spiralfedern 80, 82 in Richtung des zweiten Formwerkzeugs 10 bewegt. Dabei wurde der Stempelvorsprung 30 unter Vorstreckung bzw. Ausformung eines Abschnitts der Folienbahn 6 zur Schaffung einer vorläufigen Napfform in der Formausnehmung 16 des zweiten Formwerkzeugs 10 angeordnet. Wie zu sehen, liegt die Folienbahn 6 genau an der Außenoberfläche der annähernd halbkugelförmigen Spitze des Stempelvorsprungs 30 an. Für das Bewegen des Stempelelements 18 kann ein pneumatischer Antrieb oder ein Servomotor (nicht dargestellt) verwendet werden. Es ist zu beachten, dass das Schließelement 60 noch in der Schließposition zum Schließen der Öffnung 48 angeordnet ist.

Schließlich ist in Fig. 4 der Zustand nach dem abgeschlossenen Druckluftformvorgang gezeigt. Hierzu wurde ausgehend von der Anordnung in Fig. 3 der Ventil-Hauptkörper 56 durch den Linearaktor 78 unter Mitnahme des Schließelements 60 von der Öffnung 48 linear weg bewegt, so dass die Öffnung 48 in der Wandfläche 44 freigegeben und eine Verbindung zwischen dem mit Druckluft beaufschlagten Hohlraum 42 und der Durchgangsöffnung 32 hergestellt ist. Durch das Freigeben der Öffnung 48 wird die Druckluft aus dem Hohlraum 42 über die Durchgangsöffnung 32 und die Austrittsöffnungen 50, 52 in dem Stempelvorsprung 18 nach außen geblasen, sodass die Wandung des Napfes zur Bildung der endgültigen Napfform an die Fläche der Formausnehmung 16 in dem zweiten Formwerkzeug 10 gedrückt wird.

Nach Abschluss des Formvorgangs werden die Bewegungsschritte in umgekehrter Richtung wieder durchlaufen, d.h. ausgehend von Fig. 4 über Fig. 3 und Fig. 2, bis schließlich wieder der Zustand aus Fig. 1 erreicht ist. Schon im Zustand der Fig. 3 kann der Hohlraum 42 wieder bis zum gewünschten Druck aufgefüllt werden.

Die Abführung der beim Formvorgang in den Napf ausgestoßenen Druckluft erfolgt hingegen zwischen den Zuständen der Fig. 3 und Fig. 2 über den Zwischenraum 90 zwischen der Platte 34 des Stempelelements 18 und dem Niederhalter 20. Dies ist möglich, weil der Stempelvorsprung 30 die Durchgangsöffnung 32 der Andrückplatte 21 des Niederhalters 20 nicht luftdicht abdichtet. Der Zwischenraum 90 kann entweder, wie dargestellt, zu den Seiten hin offen sein, oder als geschlossener Raum ausgebildet sein, der über eine Entlüftungseinrichtung gezielt entlüftet werden kann.

Falls im Zustand der Fig. 4 zwischen der Platte 34 des Stempelelements 18 und dem Niederhalter 20 eine Luftdurchlässigkeit gegeben sein sollte, müssten zwischen der Platte 34 und der Andrückplatte 21 Dichtmittel eingebracht werden, um den Formvorgang mittels Druckluft zu ermöglichen.

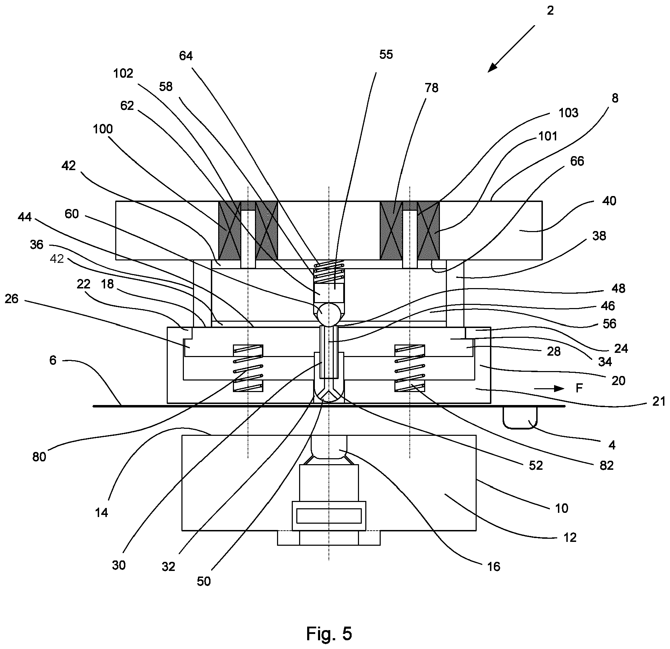

Der Linearaktor 78 zum Bewegen des Ventil-Hauptkörpers 56 ist im Beispielsfall der Fig. 1 bis 4 vorzugsweise als Pneumatikzylinder oder auch als Servomotor ausgebildet. In Fig. 5 ist eine Ausführungsform dargestellt, bei der der Linearaktor 78 ein linearer Magnetaktor ist. In der konkreten Umsetzung gemäß Fig. 5 ist der Magnetaktor ins Werkzeug integriert. Der Magnetaktor umfasst Magnete 100, 101, die in die Platte 40 integriert sind. Die Anker 102, 103 ersetzen die Schubstangen 72, 74 und sind am Ventil-Hauptkörper 56 fixiert. Die Durchführungsöffnungen 68, 70 entfallen. Damit sind mögliche Abdichtprobleme an den Schubstangen 72, 74 vermieden, und es gibt keine bewegten Kabel. Die Abdichtung der Anker 102, 103 nach außen erfolgt über eine nicht dargestellte Traverse der Grundstation.

Wenngleich in den Fig. 1 bis 5 nur ein Stempelvorsprung 30 zu sehen ist, wird das Stempelelement 18 normalerweise eine Mehrzahl von Stempelvorsprüngen 30 aufweisen. In diesem Fall sind eine entsprechende Mehrzahl von Durchgangsöffnungen 32 in der Andrückplatte 21 und eine entsprechende Mehrzahl von Formausnehmungen 16 in dem zweiten Formwerkzeug 10 vorgesehen. Außerdem umfasst der Ventil-Hauptkörper 56 dann eine entsprechende Anzahl von Durchgangsöffnungen 58 und darin verschiebebeweglich gelagerten Schließelementen 60.

Der Anschluss 43 zum Anschließen einer externen Druckluftquelle kann ein Einwegventil umfassen, welches eine Luftströmung von außen in den Hohlraum 42 zulässt und eine Luftströmung aus dem Hohlraum 42 nach außen verhindert.

Neben dem kugelförmigen Schließelement 60 kann als Schließelement 60 auch ein starres Sitzventil mit Gummilippe am Ventil-Hauptkörper 56 verwendet werden. Diese Lösung erfordert aber enge Toleranzen.

## Patentansprüche

1. Formvorrichtung (2) zum Tiefziehen von Näpfen (4) in einer erwärmten Folienbahn (6) mit
einem ersten Formwerkzeug (8), das ein Stempelelement (18) mit mindestens einem vorstehenden Stempelvorsprung (30) aufweist, in dem ein Durchgangskanal (46) gebildet ist,
einem zweiten Formwerkzeug (10) mit mindestens einer Formausnehmung (16), wobei das erste und das zweite Formwerkzeug (8, 10) derart angeordnet und ausgebildet sind, dass in einer Formposition der Formvorrichtung (2) der mindestens eine Stempelvorsprung (30) in der mindestens einen Formausnehmung (16) in dem zweiten Formwerkzeug (10) aufgenommen ist, wobei das erste Formwerkzeug (8) weiterhin eine Andrückplatte (21) aufweist, in der mindestens eine Durchgangsöffnung (32) gebildet ist, und der mindestens eine Stempelvorsprung (30) in der Formposition der Formvorrichtung (2) die mindestens eine Durchgangsöffnung (32) durchdringt,
wobei in dem Stempelelement (18) weiterhin ein Hohlraum (42) ausgebildet ist, der an einer Seite von einer Wandfläche (44) begrenzt ist, und der Durchgangskanal (46) über eine Öffnung (48) in der Wandfläche (44) mit dem Hohlraum (42) verbunden ist, und
wobei in dem Hohlraum (42) eine Ventileinrichtung (55) zum Öffnen und Schließen der Öffnung (48) in der Wandfläche (44) vorgesehen ist.

2. Formvorrichtung (2) nach Anspruch 1, **dadurch gekennzeichnet, dass** die Wandfläche (44) als ebene Fläche ausgebildet ist.

3. Formvorrichtung (2) nach Anspruch 1 oder 2, **dadurch gekennzeichnet, dass** in dem Stempelelement (18) weiterhin ein Anschluss (43) zum Anschließen einer externen Druckluftquelle an den Hohlraum (42) ausgebildet ist.

4. Formvorrichtung (2) nach einem der vorhergehenden Ansprüche, **dadurch gekennzeichnet, dass** die Öffnung (48) vollständig von der Wandfläche (44) umgeben ist.

5. Formvorrichtung (2) nach einem der vorhergehenden Ansprüche, **dadurch gekennzeichnet, dass** die Ventileinrichtung (55) einen Ventil-Hauptkörper (56), der in dem Hohlraum (42) verschiebbar angeordnet ist, und ein in Richtung auf die Öffnung (48) vorgespanntes Schließelement (60) umfasst.

6. Formvorrichtung (2) nach Anspruch 5, **dadurch gekennzeichnet, dass** der Ventil-Hauptkörper (56) eine Ventilplatte ist.

7. Formvorrichtung (2) nach Anspruch 6, **dadurch gekennzeichnet, dass** in der Ventilplatte eine zentrale Durchgangsöffnung (58) ausgebildet ist und das Schließelement (60) in der Durchgangsöffnung (58) verschiebebeweglich gelagert ist.

8. Formvorrichtung (2) nach einem der Ansprüche 5 bis 7, **dadurch gekennzeichnet, dass** das Schließelement (60) an einer weiteren Wandfläche (66), die der Wandfläche (44) gegenüberliegt, in Richtung auf das zweite Formwerkzeug (10) federnd abgestützt ist.

9. Formvorrichtung (2) nach einem der Ansprüche 5 bis 8, **dadurch gekennzeichnet, dass** das Schließelement (60) kugelförmig ausgebildet ist.

10. Formvorrichtung (2) nach einem der Ansprüche 5 bis 9, **dadurch gekennzeichnet, dass** das Stempelelement (18) weiterhin eine Platte (40) umfasst, die den Hohlraum (42) an der der Wandfläche (44) gegenüberliegenden Seite begrenzt und in welcher mindestens eine Durchführungsöffnung (68, 70) gebildet ist, und dass mindestens eine Schubstange (72, 74) vorgesehen ist, die sich durch die mindestens eine Durchführungsöffnung (68, 70) erstreckt und mit dem Ventil-Hauptkörper (56) verbunden ist.

11. Formvorrichtung (2) nach einem der vorangehenden Ansprüche, **dadurch gekennzeichnet, dass** ein Linearaktor (78) vorgesehen ist, der die Ventileinrichtung (55) in Richtung der Öffnung (48) und weg von der Öffnung (48) bewegt.

12. Formvorrichtung (2) nach Anspruch 11, **dadurch gekennzeichnet, dass** der Linearaktor (78) ein Pneumatikzylinder ist.

13. Formvorrichtung (2) nach einem der Ansprüche 1 bis 9, **dadurch gekennzeichnet, dass** ein Linearaktor (78) vorgesehen ist, der die Ventileinrichtung (55) in Richtung der Öffnung (48) und weg von der Öffnung (48) bewegt, wobei der Linearaktor (78) ein Magnetaktor ist.

## Claims

1. Moulding device (2) for the deep-drawing of cups (4) in a heated foil web (6) comprising a first moulding tool (8) which has a stamping element (18) with at least one protruding stamping projection (3) in which a through channel (46) is formed, a second moulding tool (10) with at least one moulding recess (16) wherein the first and the second moulding tools (8, 10) are arranged and configured so that in one moulding position of the moulding device (2) the at least one stamping projection (30) is received in the at least one moulding recess (16) in the second moulding tool (10), wherein the first moulding tool (8) furthermore has a pressing plate (21) in which at least one through opening (32) is formed, and the at least one stamping projection (30) in the moulding position of the moulding device (2) projects through the at least one through opening (32), wherein further in the stamping element (18) a hollow cavity (42) is formed which is defined on one side by a wall surface (44), and the through channel (46) is connected to the hollow cavity (42) via an opening (48) in the wall surface (44), and wherein a valve mechanism (55) is provided in the hollow cavity (42) for opening and closing the opening (48) in the wall surface (44).

2. Moulding device (2) according to claim 1 **characterised in that** the wall surface (44) is configured as a flat surface.

3. Moulding device (2) according to claim 1 or 2 **characterised in that** further in the stamping element (18) there is a connection (43) for connecting an external compressed air source to the hollow cavity (42).

4. Moulding device (2) according to one of the preceding claims **characterised in that** the opening (48) is completely enclosed by the wall surface (44).

5. Moulding device (2) according to one of the preceding claims **characterised in that** the valve mechanism (55) comprises a valve main body (56) which is mounted in displaceable manner in the hollow cavity (42), and a closing element (60) which is pretensioned towards the opening (48).

6. Moulding device (2) according to claim 5 **characterised in that** the valve main body (56) is a valve plate.

7. Moulding device (2) according to claim 6 **characterised in that** a central through opening (58) is formed in the valve plate, and the closing element (60) is mounted for displaceable movement in the through opening (58).

8. Moulding device (2) according to one of claims 5 to 7 **characterised in that** the closing element (60) is resiliently supported in the direction of the second moulding tool (10) on a further wall surface (66) which is opposite the wall surface (44).

9. Moulding device (2) according to one of claims 5 to 8 **characterised in that** the closing element (60) has a spherical- shaped configuration.

10. Moulding device (2) according to one of claims 5 to 9 **characterised in that** the stamping element (18) furthermore comprises a plate (40) which defines the hollow cavity (42) on the side opposite the wall surface (44) and in which at least one through opening (68, 70) is formed, and that at least one push rod (72, 74) is provided which extends through the at least one through opening (68, 70) and is connected to the valve main body (56).

11. Moulding device (2) according to one of the preceding claims **characterised in that** a linear actuator (78) is provided which moves the valve mechanism (55) towards the opening (48) and away from the opening (48).

12. Moulding device (2) according to claim 11 **characterised in that** the linear actuator (78) is a pneumatic cylinder.

13. Moulding device (2) according to one of claims 1 to 9 **characterised in that** a linear actuator (78) is provided which moves the valve mechanism (55) towards the opening (48) and away from the opening (48) wherein the linear actuator (78) is a magnetic actuator.

## Revendications

1. Dispositif de formage (2) destiné à emboutir des godets (4) dans une bande de film (6) chauffée comprenant
un premier outil de formage (8), qui comporte un élément poinçon (18) pourvu d'au moins une partie saillante de poinçon (30) en saillie, dans laquelle est formé un canal de passage (46),
un deuxième outil de formage (10) pourvu d'au moins un évidement de formage (16),
le premier et le deuxième outil de formage (8, 10) étant agencés et conçus de telle manière que, dans une position de formage du dispositif de formage (2), la ou les parties saillantes de poinçon (30) sont reçues dans l'évidement ou les évidements de formage (16) dans le deuxième outil de formage (10),
le premier outil de formage (8) comprenant en outre une plaque de pression (21) dans laquelle est formée au moins une ouverture de passage (32), et la ou les parties saillantes de poinçon (30), dans la position de formage du dispositif de formage (2), traversant l'ouverture ou les ouvertures de passage (32),
une cavité (42), qui est délimitée sur une face par une surface de paroi (44), étant ménagée en outre dans l'élément poinçon (18), et le canal de passage (46) étant relié à la cavité (42) par une ouverture (48) dans la surface de paroi (44), et
un ensemble soupape (55) destiné à ouvrir et à fermer l'ouverture (48) dans la surface de paroi (44) étant prévu dans la cavité (42).

2. Dispositif de formage (2) selon la revendication 1, **caractérisé en ce que** la surface de paroi (44) est réalisée sous la forme d'une surface plane.

3. Dispositif de formage (2) selon la revendication 1 ou 2, **caractérisé en ce qu'**un raccord (43) destiné à raccorder une source d'air comprimé externe à la cavité (42) est réalisé en outre dans l'élément poinçon (18).

4. Dispositif de formage (2) selon l'une quelconque des revendications précédentes, **caractérisé en ce que** l'ouverture (48) est entièrement entourée par la surface de paroi (44).

5. Dispositif de formage (2) selon l'une quelconque des revendications précédentes, **caractérisé en ce que** l'ensemble soupape (55) comporte un corps principal de soupape (56), qui est monté mobile dans la cavité (42), et un élément de fermeture (60) précontraint en direction de l'ouverture (48).

6. Dispositif de formage (2) selon la revendication 5, **caractérisé en ce que** le corps principal de soupape (56) est une plaque porte-soupape.

7. Dispositif de formage (2) selon la revendication 6, **caractérisé en ce qu'**une ouverture de passage (58) centrale est ménagée dans la plaque porte-soupape et l'élément de fermeture (60) est monté de manière à pouvoir se déplacer dans l'ouverture de passage (58).

8. Dispositif de formage (2) selon l'une quelconque des revendications 5 à 7, **caractérisé en ce que** l'élément de fermeture (60) est en appui élastique sur une autre surface de paroi (66), qui est opposée à la surface de paroi (44), en direction du deuxième outil de moulage (10).

9. Dispositif de formage (2) selon l'une quelconque des revendications 5 à 8, **caractérisé en ce que** l'élément de fermeture (60) est sphérique.

10. Dispositif de formage (2) selon l'une quelconque des revendications 5 à 9, **caractérisé en ce que** l'élément piston (18) comporte en outre une plaque (40), qui délimite la cavité (42) sur la face opposée à la surface de paroi (44) et dans laquelle est formée au moins une ouverture de passage (68, 70), et **en ce qu'**au moins une bielle (72, 74) est prévue, qui s'étend à travers l'ouverture ou les ouvertures de passage (68, 70) et qui est reliée au corps principal de soupape (56) .

11. Dispositif de formage (2) selon l'une quelconque des revendications précédentes, **caractérisé en ce qu'**un actionneur linéaire (78) est prévu, qui déplace l'ensemble soupape (55) en direction de l'ouverture (48) et à distance de l'ouverture (48).

12. Dispositif de formage (2) selon la revendication 11, **caractérisé en ce que** l'actionneur linéaire (78) est un cylindre pneumatique.

13. Dispositif de formage (2) selon l'une quelconque des revendications 1 à 9, **caractérisé en ce qu'**un actionneur linéaire (78) est prévu, qui déplace l'ensemble soupape (55) en direction de l'ouverture (48) et à distance de l'ouverture (48), l'actionneur linéaire (78) étant un actionneur magnétique.
